Europäisches Patentamt

European Patent Office

Office européen des brevets

(11) Numéro de publication: **0 210 912**
**A1**

(12) ## DEMANDE DE BREVET EUROPEEN

(21) Numéro de dépôt: 86401552.4

(22) Date de dépôt: 11.07.86

(51) Int. Cl.⁴: **F 16 H 1/28**

(30) Priorité: 26.07.85 FR 8511454

(43) Date de publication de la demande:
04.02.87 Bulletin 87/6

(84) Etats contractants désignés:
DE FR GB IT NL SE

(71) Demandeur: GRAFFENSTADEN ENGRENAGES
156 Route de Lyon
F-67400 Illkirch-Graffenstaden(FR)

(72) Inventeur: Weber, François
7 Impasse des Anémones
F-67400 Illkirch-Graffenstaden(FR)

(74) Mandataire: Loyer, Bertrand et al,
Cabinet Pierre Loyer 18, rue de Mogador
F-75009 Paris(FR)

(54) **Accrochage de deux couronnes à denture intérieure hélicoïdale.**

(57) Engrenage couronne à denture intérieure chevron comportant deux couronnes (1 et 2) à denture intérieure hélicoïdale (13, 14) associées dans ou par un carter externe (12), caractérisé en ce que les moyens de cette association comprennent un anneau intermédiaire (3) portant de part et d'autre de sa partie interne deux dentures hélicoïdales (4, 5) en couronne externe formant denture chevron et engrenant avec des dentures hélicoïdales internes portées par chacune des couronnes, ledit anneau (3) portant d'autre part sur sa partie externe des manchons annulaires (17, 18) à rebords internes (19, 20) formant butées pour des saillies annulaires (21, 22) portées par les couronnes (1, 2) à leur périphérie, ledit anneau (3) et/ou ses manchons associés (17, 18) étant monté dans le carter externe (12).

Fig.1

EP 0 210 912 A1

1

## Accrochage de deux couronnes à denture intérieure hélicoïdale

La présente invention se rapporte aux engrenages en couronne à denture intérieure chevron.

Il est courant de réaliser de tels engrenages sous forme de deux couronnes à denture intérieure hélicoïdale reliées par ou dans un carter externe de façon à former, par leur association, une denture intérieure chevron.

Mais cette solution pose des problèmes de réalisation mécanique qui conduisent à d'une part des produits compliqués et coûteux, d'autre part à un encombrement important de l'ensemble dans lequel les couronnes occupent un espace relativement limité ce qui, à son tour, limite la puissance transmissible dans un volume donné.

La présente invention a pour objet des perfectionnements permettant de surmonter ces inconvénients et d'augmenter la puissance transmissible par une augmentation de compacité de l'ensemble en même temps qu'elle réduit les coûts par une simplification de la construction.

La couronne à denture intérieure chevron selon l'invention comporte deux couronnes à denture intérieure hélicoïdale associées dans ou par un carter externe et elle est caractérisée en ce que les moyens de cette association comprennent un anneau intermédiaire portant de part et d'autre de sa partie interne deux dentures hélicoïdales en couronne externe formant denture chevron et engrenant avec des dentures hélicoïdales internes portées par chacune des couronnes, ledit anneau étant relié sur sa partie externe, à des manchons annulaires à rebords internes formant butées pour des saillies annulaires portées par

2

les couronnes à leur périphérie, ledit anneau et/ou ses manchons associés étant monté dans le carter externe.

On obtient ainsi un engrenage couronne à denture intérieure chevron très compacte et de construction simple, dans lequel les couronnes sont maintenues en place et en prise constante l'une avec l'autre avec une certaine liberté de déplacement axial aussi bien que radial et par conséquent une grande faculté d'adaptation et de répartition des charges nécessaires au bon fonctionnement de l'engrènement des couronnes avec, par exemple, les planétaires à denture chevron d'un train épicycloïdal, ou tout autre engrenage à denture chevron.

L'invention vise également les dispositions suivantes :

a) Les dentures hélicoïdales portées par l'anneau intermédiaire sont de même diamètre primitif que les dentures hélicoïdales internes d'engrènement des couronnes et engrènent avec celles-ci.

b) Les dentures hélicoïdales portées par l'anneau intermédiaire ont un diamètre primitif différent de celui des dentures hélicoïdales internes d'engrènement des couronnes, et coopèrent avec des dentures hélicoïdales internes portées par les couronnes, différentes des dentures internes d'engrènement et de même diamètre primitif que les dentures hélicoïdales de l'anneau intermédiaire.

c) Dans ce dernier cas, l'inclinaison des hélices de l'anneau intermédaire est choisi de façon à assurer l'équilibrage des efforts axiaux exercés sur les couronnes par les engrenages tels que planétaires coagissant avec ces couronnes ainsi que les réactions des dentures de l'anneau intermédiaire.

d) La fixation de l'anneau intermédiaire et/ou de ses manchons associés sur le carter est réalisée par l'intermédiaire d'un accouplement à denture formé d'une denture taillée à la périphérie dudit anneau et/ou desdits manchons, coagissant avec une couronne d'accouplement à denture intérieure fixée dans ledit carter, des joncs ou l'équivalent assurant le maintien en place de l'anneau intermédiaire, de préférence avec un jeu.

e) Les manchons annulaires sont montés solidaires de la partie externe de l'anneau intermédiaire.

f) Les manchons annulaires sont montés solidaires d'une couronne dentée intérieurement, tandis que la partie externe de l'anneau intermédiaire porte une couronne dentée extérieure coagissant avec la précédente.

g) Des ressorts de compression sont logés dans des manchons répartis circonférentiellement sur l'anneau intermédiaire dans la zone de cet anneau situé entre les couronnes.

L'invention est illustrée par le dessin joint sur lequel on a représenté :

Figure 1 : une première variante de réalisation, en coupe axiale partielle ;

Figure 2 : une seconde variante de réalisation, en coupe axiale partielle ;

Figure 3 : une variante de réalisation de la fixation dans le carter, applicable aux exemples des figures 1 et 2, également en coupe axiale partielle ;

Figure 4 : une autre variante de réalisation de la fixation dans le carter.

4

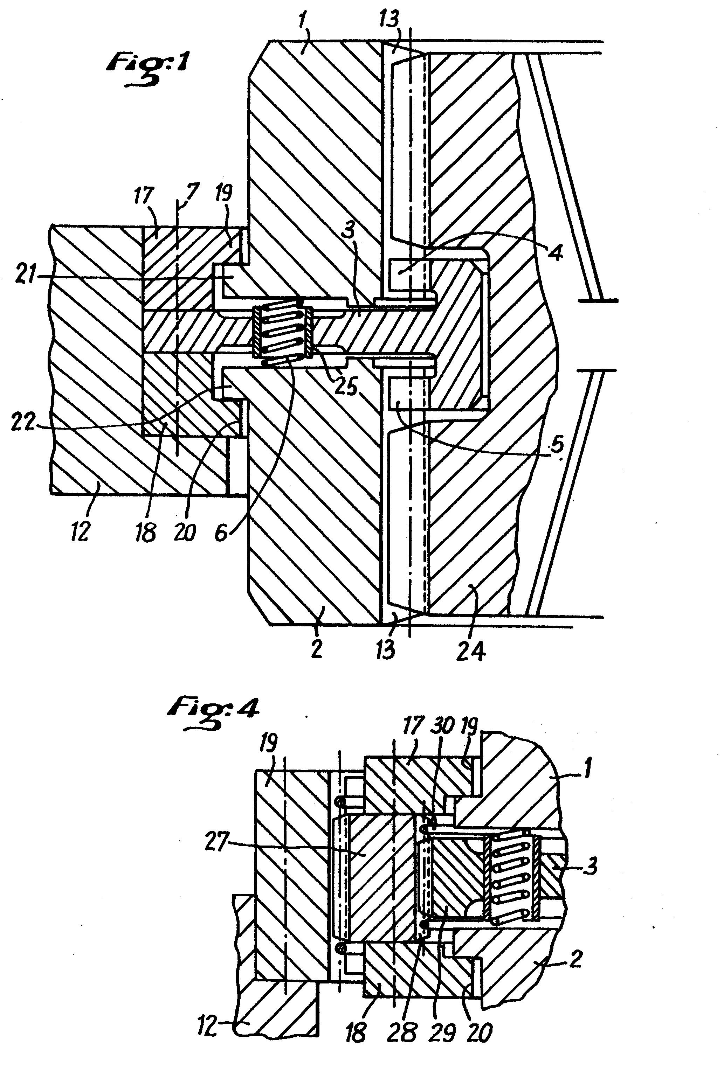

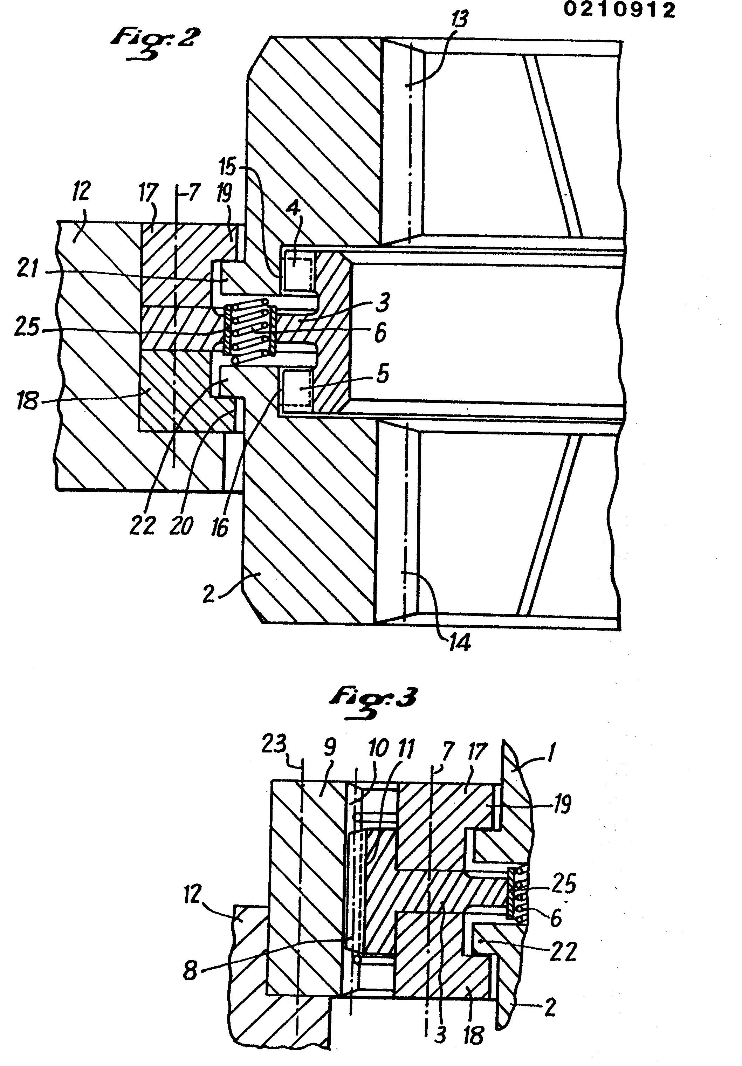

En se reportant aux figures 1 et 2, on voit que l'ensemble selon l'invention, constituant un engrenage en couronne à denture intérieure chevron comporte deux couronnes 1 et 2 à denture intérieure hélicoïdale 13, 14, associées dans ou par un carter externe 12 ; cette association est réalisée par le moyen d'un anneau intermédiaire 3, d'épaisseur relativmeent faible, qui porte, dans sa zone interne, deux dentures hélicoïdales 4 et 5 disposées en couronne externe de part et d'autre de l'anneau 3 , formant denture chevron, et engrenant avec des dentures hélicoïdales internes portées par les couronnes 1 et 2.

Dans le cas de la figure 1, les dentures 4 et 5 ont les mêmes diamètres primitifs que les dentures d'engrènement 13 et 14 des couronnes 1 et 2. Dans cette variante, les efforts axiaux exercés sur les couronnes par les engrenages coopérant avec elles (tels que les planétaires 24 d'un train épicycloïdal et la couronne intermédiaire 3), s'équilibrent du fait que les diamètres primitifs des dentures 4, 5 et 13, 14 sont identiques.

Dans le cas de la figure 2, les dentures 4 et 5 ont un diamètre primitif différent (dans l'exemple représenté, ce diamètre est supérieur) de celui des dentures 13, 14 et les couronnes 1 et 2 portent deux autres dentures hélicoïdales internes 15 et 16 de même diamètre que les dentures 4, 5 et coopérant avec ces dernières (même diamètre primitif).

Dans ce cas, l'inclinaison des hélices des dentures 4, 5 et 15, 16 sera de préférence déterminée de façon à assurer l'équilibrage des efforts axiaux exercés par les engrenages coopérant avec les couronnes 1 et 2 et les réactions des dentures 4 et 5.

L'anneau intermédiaire 3 porte en outre, sur sa partie périphérique externe, des manchons annulaires 17, 18 comportant des rebords internes 19, 20 formant butées pour des saillies annulaires 21, 22 portées par les couronnes 1 et 2 à leur périphérie.

Dans le cas de la figure 1, l'anneau 3 et les manchons 17, 18 sont solidarisés entre eux et avec le carter 12 par exemple par vissage selon l'axe 7.

Dans le cas de la variante de la figure 3, les manchons 17 et 18 sont solidarisés avec l'anneau 3 par vissage en 7 et l'anneau 3 porte à sa périphérie une denture 8 engrenant avec la denture intérieure 10 d'une couronne 9 fixée sur le carter 12, par exemple par vissage selon l'axe 23.

Dans cet exemple, le maintien axial de l'ensemble 1, 2, 3 dans la couronne 9 est assuré par des joncs 11, de rpéférence avec jeu ; tout autre moyen équivalent peut être utilisé.

Dans la variante de la figure 4, qui peut être utilisée aussi bien dans le cas de la figure 1 que dans celui de la figure 2, les manchons 17 , 18 sont fixés sur une couronne 27 portant une denture intérieure 28 coopérant avec une couronne 29 portée extérieurement par l'anneau 3. Cela permet de prévoir un jeu de l'anneau 3 dans l'ensemble formé par les manchons 17, 18 et la couronne 27 (des joncs 30 étant avantageusement prévus pour le maintien élastique avec jeu de l'anneau 3 dans cet ensemble).

Le dispositif ainsi constitué présente un degré de liberté supplémentaire, ce qui augmente la capacité d'adaptation et de répartition des charges de l'engrènement des couronnes avec, par exemple, les planétaires.

Comme représenté figure 4, cette variante peut être adaptée à la variante de la figure 3 comprenant une couronne 9 fixée dans le carter 12 et engrenant avec une couronne externe 8 portée à l'extérieur de l'ensemble 17, 18, 27.

Mais l'ensemble 17, 18, 27 peut également être directement fixé dans ou sur le carter 12 comme représenté figure 1 ou figure 2.

Comme on peut le voir par les dessins des exemples de réalisation des figures 1 et 2, l'invention permet de réaliser un ensemble d'encombrement très réduit par rapport aux solutions antérieures et cet ensemble est d'une conception simple et d'une réalisation peu coûteuse. Il présente en outre l'avantage d'assurer une liberté de déplacement tant axial que radial des couronnes 1 et 2 tout en assurant leur association et leur maintien en prise l'une avec l'autre ; cet ensemble présente donc la faculté d'adaptation et de répartition des charges nécessaires au fonctionnement correct de l'engrènement avec, par exemple, plusieurs planétaires 24 à denture chevron d'un même train épicycloïdal.

Des ressorts de compression 6 sont avantageusement répartis selon une circonférence de l'anneau 3 située entre les couronnes 1 et 2 pour repousser constamment et élastiquement ces couronnes en butée contre les rebors 19 et 20. Les ressorts 6 pourront être logés dans des manchons 25 sertis ou fixés dans l'épaisseur de l'anneau 3 qu'ils traversent de sorte que chaque ressort 6 s'appuie à la fois sur les couronnes 1 et 2.

Dans une disposition telle que représenté, ces ressorts servent également à supporter la masse de la couronne supérieure 1 (par exemple dans le cas d'un train épicycloïdal à disposition verticale).

Revendications de brevezt

1. Engrenage couronne à denture intérieure chevron comportant deux couronnes (1 et 2) à denture intérieure hélicoïdale (13, 14) associées dans ou par un carter externe (12), caractérisé en ce que les moyens de cette association comprennent un anneau intermédiaire (3) portant de part et d'autre de sa partie interne deux dentures hélicoïdales (4, 5) en couronne externe formant denture chevron et engrenant avec des dentures hélicoïdales internes portées par chacune des couronnes, ledit anneau (3) portant d'autre part sur sa partie externe des manchons annulaires (17, 18) à rebords internes (19, 20) formant butées pour des saillies annulaires (21, 22) portées par les couronnes (1, 2) à leur périphérie, ledit anneau (3) et/ou ses manchons associés (17, 18) étant monté dans le carter externe (12).

2. Engrenage selon la revendication 1, caractérisé en ce que les dentures hélicoïdales (4, 5) portées par l'anneau intermédiaire (3) sont de même diamètre primitif que les dentures hélicoïdales internes d'engrènement (13, 14) des couronnes (1 et 2) et engrènent avec celles-ci.

3. Engrenage selon la revendication 1, caractérisé en ce que les dentures hélicoïdales (4, 5) portées par l'anneau intermédiaire (3) ont un diamètre primitif différent de celui des dentures hélicoïdales internes d'engrènement (13, 14) des couronnes, et coopèrent avec des dentures hélicoïdales internes (15, 16) portées par les couronnes, différentes des dentures internes d'engrènement (13, 14) et de même diamètre primitif que les dentures hélicoïdales (4, 5) de l'anneau intermédiaire (3).

4. Engrenage selon la revendication 3, caractérisé en ce que dans ce dernier cas, l'inclinaison des hélices de l'anneau intermédiaire est choisi de façon à assurer l'équilibrage des efforts axiaux exercés sur les couronnes par les engrenages tels que planétaires coagissant avec ces couronnes ainsi que les réactions des dentures de l'anneau intermédiaire.

5. Engrenage selon l'une quelconque des revendications précédentes, caractérisé en ce que la fixation de l'anneau intermédiaire (3) et/ou de ses manchons associés (17, 18) sur le carter (12) est réalisée par l'intermédiaire d'un accouplement à denture formé d'une denture (8) taillée à la périphérie dudit anneau et/ou desdits manchons, coagissant avec une couronne d'accouplement (9) à denture intérieure (10) fixée dans ledit carter (12), des joncs ou l'équivalent (11) assurant le maintien en place de l'anneau intermédiaire, de préférence avec un jeu.

6. Engrenage selon l'une quelconque des revendications précédentes, caractérisé en ce que les manchons annulaires (17, 18) sont montés solidaires de la partie externe de l'anneau intermédiaire (3).

7. Engrenage selon l'une quelconque des revendications précédentes, caractérisé en ce que les manchons annulaires (17, 18) sont montés solidaires d'une couronne (27) dentée intérieurement, tandis que la partie externe de l'anneau intermédiaire (3) porte une couronne dentée extérieure (29) coagissant avec la précédente.

8. Engrenage selon l'une quelconque des revendications précédentes, caractérisé en ce que des ressorts de compression (6) sont logés dans des manchons (25) répartis circonférentiellement sur l'anneau intermédiaire (3) dans la zone de cet anneau situé entre les couronnes (1 et 2).

Fig:1

Fig:4

0210912

Fig. 2

Fig. 3

Office européen
des brevets

**RAPPORT DE RECHERCHE EUROPEENNE**

EP    86 40 1552

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | DE-C- 737 886 (STOECKICHT) <br> * Page 3, lignes 45-64; figure * | 1,2,5 | F 16 H    1/28 |
| | --- | | |
| A | FR-A-2 534 340 (COMPAGNIE INDUSTRIELLE DES TELECOMMUNICATIONS CIT-ALCATEL) <br> * Résumé; figure 2 * | 1,2 | |
| | --- | | |
| A | US-A-2 703 021 (STOECKICHT) <br> * Colonne 2, ligne 65 - colonne 3, ligne 7; figure 1 * | 1,2 | |
| | ----- | | |

**DOMAINES TECHNIQUES RECHERCHES (Int Cl.4)**

F 16 H

Le present rapport de recherche a ete etabli pour toutes les revendications

| Lieu de la recherche <br> LA HAYE | Date d'achèvement de la recherche <br> 24-10-1986 | Examinateur <br> MENDE H. |
|---|---|---|

OEB Form 1503 03 82

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant